# EUROPEAN PATENT APPLICATION

(11) **EP 1 264 626 A1**
(43) Date of publication of application: **11.12.2002**
(21) Application number: 02007844.0
(22) Date of filing: 08.04.2002
(51) Int. Cl.: B01D 29/66, B01D 29/70

(54) **Variable pore micro filter having simple and compact structure capable of side stream filtration and cross flow filtration**

(30) Priority: 07.06.2001 KR 2001031815
(71) Applicant: CHOI, Choong Hyun, Hanam-si, Kyungki-do (KR)
(72) Inventor: CHOI, Choong Hyun, Hanam-si, Kyungki-do (KR)
(74) Representative: Finck, Dieter, Dr.Ing.

(57) **Abstract**

A variable pore micro filter (VPMF) capable of side stream filtration and cross flow filtration is disclosed. The VPMF includes a cylindrical pressure vessel (25), an upper plate flange (27) to which an original water inflow tube (30) is connected, a lower plate flange (29) to which a process water discharging tube (31) is connected, a latitudinal thread filtering unit whose lower portion is installed on the lower plate flange (29) and whose upper portion is fixed on a movable upper holder (22) on which throughholes (22a) are formed, the filtering unit having flexible latitudinal thread filters (21a,21b) forming a filter layer (40), a process water collection vessel (24) for collecting and guiding the process water filtered through the filter layer (40), an enriched water discharging unit for discharging the enriched water, and a pressurized air inflow unit (33,37a,b,c) for injecting pressurized air in order to counter-clean the contaminated thread filter.

## Description

### BACKGROUND OF THE INVENTION

### Field of the Invention

The present invention relates to a variable pore micro filter (VPMF) capable of side stream filtration and/or cross flow filtration, and more particularly, to a variable pore micro filter (VPMF) capable of side stream filtration and/or cross flow filtration which can be effectively applied to filtration of a high concentration of original water, in which part of original water inflow is filtered through the upper portion of a compressed filter layer and part thereof is filtered through the side portion of the filter layer, to thereby enlarge a filtration area and thus increase a processing quantity, and enriched water generated along the inner grooves of a pressure vessel is fed back to an original water tank along an enriched water discharging tube located in the lower portion of the pressure vessel.

### Description of the Related Art

A micro filter is used as an apparatus for filtering suspended solids contained in fluid, particularly water, in order to filter suspended matters, pre-process various sewage and waste water before high-quality processing them such as active carbon, ozone, photo catalyst, membrane separation process, or perform a water-treatment of a reuse purpose, at a water purifying process in a water purification pool.

In the case of the micro filters which are used as the above use purposes, each pore in a filter which performs a filtering operation is of a predetermined size. Accordingly, if the micro pores are clogged by the filtered contaminants after having run for a predetermined time, it is not possible to counter-clean the filter, or a counter-cleaning restore ratio is very low. As a result, most of micro filters should be exchanged with new micro filters.

As such, the reason why a counter-cleaning efficiency is lowered is because the pore structure is not changed in the case of both filtering and counter-cleaning. As a result, the contaminant captured in the pores of the micro filter is not easily removed, to thereby cause a low counter-cleaning efficiency.

To improve the problems of the existing filter, a filter having a variable filter layer was proposed by the same applicant in Korean Laid-open Patent Publication No. 97-74668, which was granted Korean Patent No. 241198 and United States Patent No. 5,984,108, in which suspended solids contained in fluid, particularly water can be filtered with high purification by varying the structure of pores of a filter layer at both filtering and counter-cleaning, and the counter-cleaning is performed using air pressure and clean water to thereby provide an excellent counter-cleaning efficiency.

The above filter adopts a dead end filtration method, in which original water having flowed in the filter cannot be discharged through a process water discharging tube unless it passes through a filter layer. As a result, since a filtering is performed in both radial and vertical filtration directions, a filtering area becomes small and thus an amount of process water becomes small. Also, since both pressurized air and clean water flow in through a process water discharging tube at the time of counter-cleaning, the flow of the pressurized air and the clean water are not uniformly distributed in the pressure vessel, with a result that a latitudinal thread filter may not be partially counter-cleaned. Also, since a filter layer is contaminated rapidly by the contaminants when high-concentration original water is processed with the above filter, a counter-cleaning period is shortened, to greatly reduce a filtering time and a processing amount. That is, the filter is not appropriate for filtering the high-concentration original water in view of the filtering time and the processing amount.

The same applicant proposed a variable pore micro filter (VPMF) capable of cross flow filtration in Korean Patent Laid-open Publication No. 2000-74529. Here, part of original water inflow via a by-pass passage between inner and outer portions of a pressure vessel is filtered through a side surface of a wide filer layer at the time of filtration and counter-cleaning of suspended solids according to compression and release of a flexible latitudinal thread filter, to thereby pursue an increase of a processing amount, and part of the original water is fed back to an original water tank, to thereby pursue to enrich the original water according to passage of time and simultaneously provide an effective application to filtration of high-concentration original water by extension of a counter-cleaning period. Also, the process water and pressurized air is applied to a lower plate flange at the time of counter-cleaning, and simultaneously the flexible latitudinal thread filter is twisted compulsively with a holder rotator, to generate a turbulence torrent and thus increase a counter-cleaning effect.

However, in the existing art, the upper portion of a process water collection tube is connected with the lower side groove in an upper holder according to lowering of the upper holder which has a throughhole-less structure at the time of filtering. Accordingly, the existing art has a structure that a filter layer is not formed between the process water collection tube and the upper holder. Thus, all the original water to be processed is not filtered through the upper holder, but is filtered with only side surface filtration through a by-pass passage between the inner and outer portions of the pressure vessel. As a result, a filtration area is limited to cause a small amount of filtered water.

Further, in the existing art, the structure of a lower plate flange through which the process water, the enriched water and the pressurized air pass is formed of a single circular plate, and the enriched water discharging tubes and air inflow tubes of three or four branches are integrated into a single tube at the leading end of the filter. Accordingly, a uniform enriched water discharging operation from a vessel to a lower plate flange and a uniform air inflow operation through the lower plate flange into the vessel has not been smoothly performed. Also, a holder rotator structure for generating an artificial disturbant stream at the time of counter-cleaning becomes a factor which makes the structure of the system complicated.

### SUMMARY OF THE INVENTION

To solve the above problems, it is an object of the present invention to provide a variable pore micro filter (VPMF) having a simple and single vessel type structure capable of side stream filtration which are provided with a plurality of grooves in a pressure vessel, when suspended solids are filtered according to compression of a flexible latitudinal thread filter, in which part of original water inflow is filtered through the upper portion of a filter layer compressed via an upper holder and most parts thereof are filtered through the side portion of the filter layer along the inner grooves in the pressure vessel, to thereby enlarge a filtration area and thus increase a processing quantity.

It is another object of the present invention to provide a variable pore micro filter (VPMF) having a single pressure vessel capable of cross flow filtration which can be effectively applied for a high concentration filtration by consistently maintaining a concentration of suspended solids in the pressure vessel in which part of original water is side stream filtered and remaining parts of the unprocessed original water and the enriched water sequentially flow out along the grooves formed in the pressure vessel and are fed back to an original water tank along an enriched water discharging tube.

It is still another object of the present invention to provide a variable pore micro filter capable of cross flow filtration having a double pressure vessel, in which a filtration area is increased through filtration of the upper portion and the side portion of a filter layer.

It is yet another of the present invention to provide a variable pore micro filter which can enhance a counter-cleaning efficiency by further extending the sizes of pores in a filter layer, and increasing a disturbant torrent raised by clean water and pressurized air, in which clean water is supplied to a process water discharging tube at the time of counter-cleaning to then release compression of a latitudinal thread filter, and the pressurized air and the clean water are separately supplied through an air inflow tube and a process water discharging tube, respectively so that the pressurized air and the clean water are uniformly supplied into the pressure vessel.

To accomplish the above object of the present invention, there is provided a variable pore micro filter comprising: a cylindrical pressure vessel; an upper plate flange connected to the upper portion of the pressure vessel, the upper plate flange being connected with an original water inflow tube through which original water containing suspended solids is introduced; a lower plate flange connected to the lower portion of the pressure vessel, the lower plate flange being connected with a process water discharging tube for discharging filtered process water; a latitudinal filtration unit whose lower portion is fixedly installed on a lower holder installed on the lower plate flange and whose upper portion is fixed on a movable upper holder on which a plurality of throughholes providing a filtration passage of the original water are formed, the latitudinal filtration unit having a plurality of flexible latitudinal thread filters forming a filter layer when the plurality of flexible latitudinal thread filters move to the lower portion of the pressure vessel according to an inflow of the original water and then are deposited one after the other; a process water collection vessel installed on the center of the lower portion of the pressure vessel, collecting the process water filtered through the filter layer into the hollow inner portion through a plurality of process water collection holes, and guiding the collected process water through the process water discharging tube; and a pressurized air injection unit for injecting pressurized air through the lower plate flange and the lower holder in order to counter-clean the plurality of the flexible latitudinal thread filters contaminated by the suspended solids, wherein the upper holder is lowered at the time of filtering the original water so that the plurality of the latitudinal thread filters are compressed around the process water collection vessel to thereby form a filter layer, and the original water flowing into the pressure vessel is filtered through the upper portion and the side portion of the filter layer.

Preferably, a flexible complex latitudinal thread filter of a double structure is installed in which an inner filter is a thin fiber and an outer filter is a thick filter in order to the original water flows smoothly through the side portion of the filter layer, in the case that the latitudinal thread filter used in the variable pore micro filter is a thin fiber in order to process the original water with a high purification ratio.

Preferably, the plurality of collection holes formed in the process water collection vessel are formed in the side portion of the process water collection vessel or both the upper portion and the side portion thereof.

Preferably, the present invention further comprises a pressurized air buffering unit for buffering the pressurized air injected from the pressurized air injection unit and applying uniform pressurized air into a plurality of injection holes on the lower plate flange is comprised on the lower portion of the lower plate flange, to thereby achieve the injection of the uniform pressurized air, wherein the plurality of injection holes are concentrically formed on the lower plate flange, and a plurality of throughholes are formed up and down at a position where pressurized air can be injected between the plurality of latitudinal thread filters concentrically arranged on the lower holder.

Preferably, the pressurized air buffering unit comprises a first chamber through which the pressurized air is introduced, and a second chamber for communicating with the first chamber in the central portion thereof and guiding the pressurized air into the injection hole on the lower plate flange.

Further, an enriched water collection unit for collecting the enriched water and guiding the same to an enriched water discharging tube is provided in the lower portion of the lower plate flange, and a plurality of throughholes for collecting the enriched water and guiding the same to an enriched water collection unit is formed in the lower plate flange at the position corresponding to the grooves of the pressure vessel.

In the case that the concentration of the original water flowing in the variable pore micro filter is high, the grooves are formed inside the pressure vessel so that the original water in the variable pore micro filter flows smoothly through the side portion of the filter layer, and the lower plate flange is added with the enriched water discharging tube in order to feed the enriched water generated along the grooves back to the original water tank.

According to another aspect of the present invention, there is also provided a variable pore micro filter (VPMF) for performing cross flow filtration, the variable pore micro filter comprising: an outer cylindrical pressure vessel; an inner pressure vessel disposed concentrically distant by a predetermined interval in the outer pressure vessel, and on the lower portion of which a plurality of throughholes are formed; an upper plate flange connected to the upper portions of the outer and inner pressure vessels, the upper plate flange being connected with an original water inflow tube through which original water containing suspended solids is introduced; a lower plate flange connected to the lower portions of the outer and inner pressure vessels, the lower plate flange being connected with a process water discharging tube for discharging filtered process water; a latitudinal filtration unit whose lower portion is fixedly installed on a lower holder installed on the lower plate flange and whose upper portion is fixed on a movable upper holder on which a plurality of throughholes providing a filtration passage of the original water are formed, the latitudinal filtration unit having a plurality of flexible latitudinal thread filters forming a filter layer when the plurality of flexible latitudinal thread filters move to the lower portion of the pressure vessel according to an inflow of the original water and then are deposited one after the other; a process water collection vessel installed on the center of the lower portion of the pressure vessel, collecting the process water filtered through the filter layer into the hollow inner portion through a plurality of process water collection holes, and guiding the collected process water through the process water discharging tube; an original water enriching unit for collecting the original water and the enriched water which has been introduced into a space formed between the outer and inner pressure vessels through the throughholes formed on the upper portion of the inner pressure vessel but has not been introduced into the inner pressure vessel through the throughholes formed on the lower portion of the inner pressure vessel, via the lower plate flange and feeding the collected water back to the original water tank; and a pressurized air injection unit for injecting pressurized air through the lower plate flange and the lower holder in order to counter-clean the plurality of the flexible latitudinal thread filters contaminated by the suspended solids, wherein the upper holder is lowered at the time of filtering the original water so that the plurality of the latitudinal thread filters are compressed around the process water collection vessel to thereby form a filter layer, and the original water flowing into the pressure vessel is filtered through the upper portion and the side portion of the filter layer, and through the throughholes on the upper holder and the lower-side throughholes on the inner pressure vessel, and then collected into the process water vessel, and the original water and the enriched water which has not been introduced into the inner pressure vessel is collected through the lower plate flange and then fed back to the original water tank.

The variable pore micro filter according to the present invention is capable of side stream filtration and/or cross flow filtration. The counter-cleaning of the filter layer in the variable pore micro filter is effectively performed by injecting the clean water through the process water discharging tube, and simultaneously separately supplying the pressurized air through the throughholes disposed with a predetermined interval on a multiple concentric circle penetrating the upper and lower portions of the lower plate holder by means of the pressurized air injection unit, at the state where the compression of the filter layer has been released by the injected clean water, in order to increase a turbulence torrent raised by the pressurized air and the clean water, to accordingly remove the solids captured by the latitudinal thread filters.

### BRIEF DESCRIPTION'OF THE DRAWINGS

The above objects and other advantages of the present invention will become more apparent by describing the preferred embodiments thereof in more detail with reference to the accompanying drawings in which:
FIG. 1 is a cross-sectional view showing the internal structure of a variable pore micro filter (VPMF) capable of side stream filtration according to a first embodiment of the present invention;
FIG. 2A is a cross-sectional view for explaining a filtration operation of the first embodiment according to the present invention;
FIG. 2B is a cross-sectional view for explaining a counter-cleaning operation of the first embodiment according to the present invention;
FIG. 3 is a cross-sectional view showing the internal structure of a variable pore micro filter (VPMF) capable of cross flow filtration according to a second embodiment of the present invention;
FIG. 4A is a partially exploded cross-sectional view showing grooves formed on the inner wall of the pressure vessel in the second embodiment of the present invention;
FIG. 4B is a cross-sectional view cut along line A-A' of FIG. 4A;
FIG. 5A is a cross-sectional view for explaining a filtration operation of the second embodiment according to the present invention;
FIG. 5B is a cross-sectional view for explaining a counter-cleaning operation of the second embodiment according to the present invention; and
FIG. 6 is a cross-sectional view showing the internal structure of a variable pore micro filter (VPMF) capable of cross flow filtration according to a third embodiment of the present invention.

### DETAILED DESCRIPTION OF THE INVENTION

Preferred embodiments of the present invention will be described with reference to the accompanying drawings.

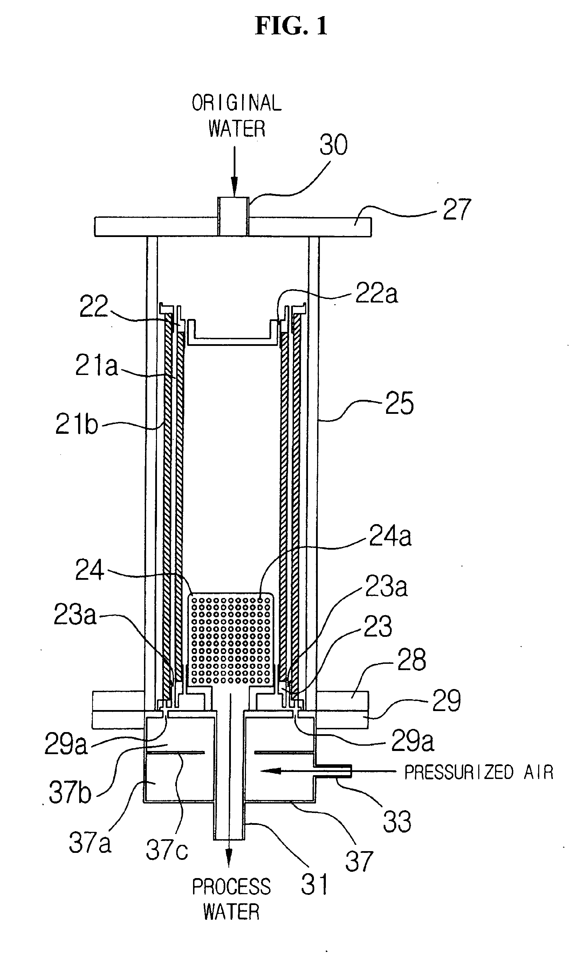

Referring to FIG. 1 showing a variable pore micro filter (VPMF) capable of side stream filtration according to a first embodiment of the present invention, an upper plate flange 27 is combined on the upper portion of a cylindrical pressure vessel 25, in which case an original injection tube 30 for guiding original water to be filtered into the upper portion of the variable pore micro filter from an external water source is installed on the upper plate flange 27. A lower plate flange 29 is separably combined with a coupling flange 28 positioned in the lower portion of the pressure vessel 25, in which case a process water discharging tube 31 for discharging the filtered process water is discharged, and a pressurized air injection tube 33 for counter-cleaning are installed on the lower plate flange 29.

A process water discharging tube 31 is combined in the center of the lower plate flange 29, and a pressurized air inflow unit 37 for surrounding the process water discharging tube 31 and injecting uniform pressurized air is disposed in the lower portion of the lower plate flange 29.

The pressurized air inflow unit 37 includes first and second chambers 37a and 37b which communicate with each other in the central portion thereof, which has a structure that the pressurized air injection tube 33 is connected to the first chamber 37a, and the pressurized air can be injected from the second chamber 37b into the pressure vessel 25 through a plurality of injection holes 29a formed equidistantly in the lower plate flange 29. The pressurized air inflow unit 37 is divided into the first and second chambers 37a and 37b by a partition 37c.

One end of the pressurized air inflow unit 37 is extended to a space formed between a lower holder 23 to be described later and the lower plate flange 29 via the injection hole 29a formed on the lower plate flange 29, and the other end thereof is connected to an air compressor (not shown) for generating pressurized air necessary for counter-cleaning via the pressurized air injection tube 33 which is an air supply tube.

A plurality of throughholes 23a are formed vertically on the lower holder 23 at a position where the pressurized air can be injected between a pair of flexible latitudinal thread filters 21a and 21b.

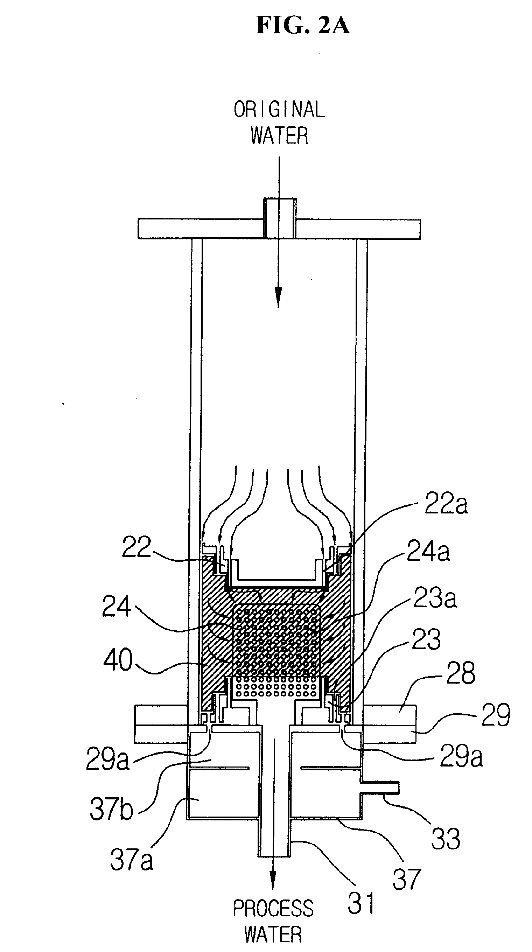

Meanwhile, the upper portions of the pair of flexible latitudinal thread filters which are concentrically arranged in a double cylindrical form are fixed to the lower portion. of an upper holder 22 which is movably installed up and down in the pressure vessel 23, and the lower portions thereof are fixed to the lower holder 23 fixed to the lower plate flange 29. A process water collection vessel 24 is installed in the center of the lower plate flange 29, in which the process water collection vessel 24 collects the process water filtered through the filter layer 40 of FIG. 2A formed of the flexible latitudinal thread filters 21a and 21b and transfers the collected process water to a process water discharging tube 31.

A plurality of throughholes 22a are formed on the upper holder 22. Accordingly, in the case that the original water having a predetermined pressure or higher is applied to the upper holder 22, the plurality of throughholes 22a formed on the upper holder 22 form paths to allow the original water to be introduced to the filter layer 40 formed on the lower portion of the pressure vessel 25.

A plurality of process water collection holes 24a are formed on both the upper portion and side portion of the process water collection vessel 24. Otherwise, a plurality of process water collection holes 24a are formed on only the side portion of the process water collection vessel 24 except the upper portion, and the lower portion of the process water collection vessel 24 is fixedly combined with the lower holder 23 and simultaneously communicated with the process water discharging tube 31.

Meanwhile, as illustrated above, the latitudinal thread filters 21a and 21b are concentrically arranged in a double cylindrical form. However, the latitudinal thread filters may be concentrically arranged in a triple or quadruple cylindrical form. The number of the whole latitudinal thread filters can be increased or decreased according to the size of the variable pore micro filter. The concentrically arranged latitudinal thread filters 21a and 21b are preferably disposed at a constant interval in the pressure vessel 25 to form uniform air vent holes on the filter layer 40.

Also, when the original water is processed at a high purification degree as in a second embodiment, it is preferable to use thin fibers as latitudinal thread filters which are used for the variable pore micro filter. Thus, it is preferable that an inner filter is formed of a fiber of a thin diameter and an outer filter is formed of a fiber of a thick diameter, in order to allow the original water to flow smoothly through the side portion of the filter layer. That is, it is preferable that the flexible complex latitudinal thread filters of a double structure are installed in the pressure vessel 25.

For example, a synthetic fiber such as polyester, nylon, and polypropylene (PP), and a flexible metallic thin thread of steel or copper can be used as a flexible or durable material for the latitudinal thread filters 21a and 21b forming the filter layer 40 according to the lowering compression of the upper holder 22. The upper holder 22 can be made of plastic so that the latitudinal thread filters have vertical postures by buoyancy. The shapes of the upper holder 22 and the lower holder 23 are determined according to the shape of the pressure vessel.

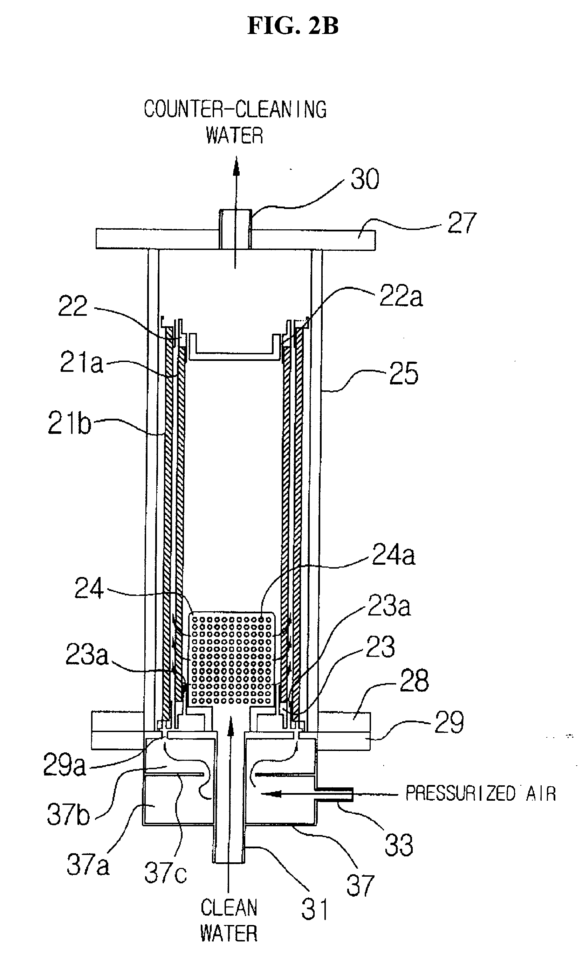

The function of the first embodiment will be described below in more detail with reference to FIGs. 2A and 2B.

FIG. 2A is a cross-sectional view for explaining a filtration operation of the first embodiment according to the present invention, and FIG. 2B is a cross-sectional view for explaining a counter-cleaning operation of the first embodiment according to the present invention.

First, referring to FIG. 2A, a filtration operation of the first embodiment according to the present invention will be described below. The upper holder 22 rises upwards in the pressure vessel 25 by buoyancy at an initial time as shown in FIG. 1. At the time of filtering original water, an original water pump (not shown) is driven to pump out the original water from an original water tank (not shown) into the pressure vessel 25 under a predetermined water pressure, to thereby press the upper holder 22. In this case, the upper holder 22 maintains a small amount of interval from the inner surface of the pressure vessel 25. Accordingly, when the original water of the predetermined pressure is applied into the pressure vessel 25, the upper holder 22 falls down to press the latitudinal thread filters 21a and 21b.

Accordingly, the latitudinal thread filters 21a and 21b are compressed to the lower holder 23 by the water pressure, to thereby form the filter layer 40 having finite pores, for example, air vent holes of a variety of sizes according to the thickness and material of the flexible latitudinal thread filters, for example, from 25µm down to 0.05µm as illustrated in FIG. 2A. Then, when the inner pressure of the pressure vessel 25 with respect to the upper holder 22 rises up, the original water flows towards the filter layer 40 through the plurality of throughholes 22a, and the space between the upper holder 22 and the pressure vessel 25.

In this case, the latitudinal thread filters 21a and 21b are deposited between the upper holder 22 and the process water collection vessel 24 to thereby form part of the filter layer 40, differently from the conventional art.

Thus, the suspended solids contained in the original water are passed and then removed through the filter layer 40. The filtered process water is collected into the process water collection vessel 24 disposed in the central portion of the pressure vessel 25 through the collection holes 24a of the process water collection vessel 24, and discharged to a process water tank (not shown) through the process water discharging tube 31. Here, at the time of filtering the original water through the filter layer 40, the suspended solids are filtered through the upper and side portions of the filter layer 40, that is, the whole portions of the filter layer 40. Therefore, the present invention greatly increases a filtration area in comparison with the conventional art which uses only the upper or side portion of the filter layer, to thereby increase an amount of the process water and enhance a filtration efficiency.

Then, referring to FIG. 2B, a counter-cleaning operation of the first embodiment according to the present invention will be described below.

If the variable pore micro filter is run for a predetermined time, the filter layer 40 is polluted more than a reference value by the suspended solids. In this case, counter-cleaning of the latitudinal thread filters 21a and 21b are performed. For counter-cleaning, clean water of a predetermined pressure is injected through the process water discharging tube 31 in order to release compression of the filter layer 40.

Then, at the state that the compression of the filter layer 40 has been released, the clean water is injected through the process water discharging tube 31, and the pressurized air is injected through the air injection tube 33. Here, the pressurized air is uniformly injected between the flexible latitudinal thread filters 21a and 21b, through the plurality of throughholes 29a which are vertically formed on the lower holder 23 while passing through the first and second chambers 37a and 37b in the pressurized air inflow unit 37.

Here, the separately injected clean water and pressurized air enlarges the size of each pore in the compression released filter layer 40 and simultaneously forms a turbulence torrent, to easily remove the solids captured by the latitudinal thread filters 21a and 21b. Then, the counter-clean water is discharged through the original water injection tube 30.

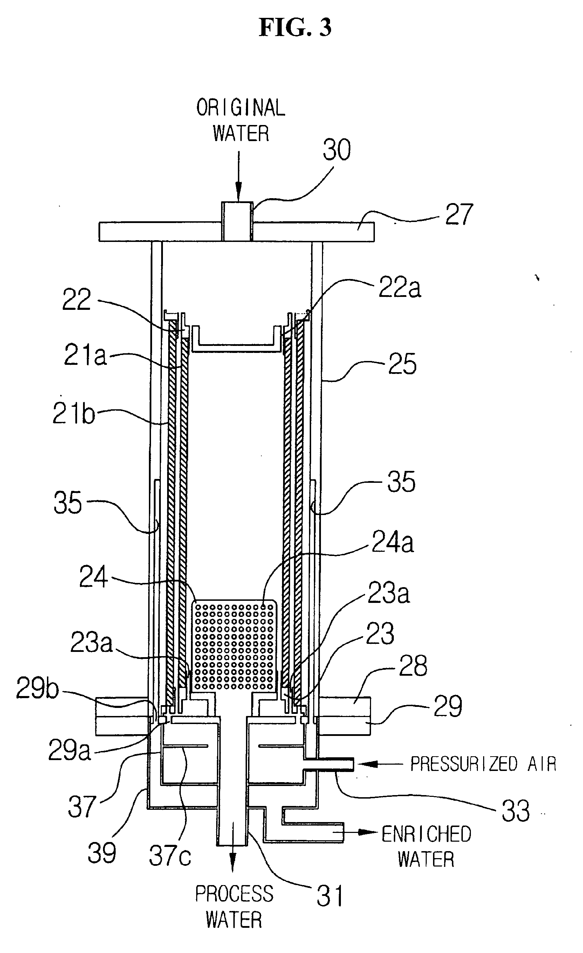

Meanwhile, a variable pore micro filter capable of cross flow filtration according to a second embodiment shown in FIGs. 3 through 5B additionally includes an original water enriching unit in addition to the elements of the first embodiment of the present invention. The other elements of the second embodiment are same as those of the first embodiment thereof. Thus, in the second embodiment, the same elements as those of the first embodiment have the same reference numerals as those of the first embodiment, whose description will be omitted. Only the different portions of the second embodiment in comparison with the first embodiment will be described.

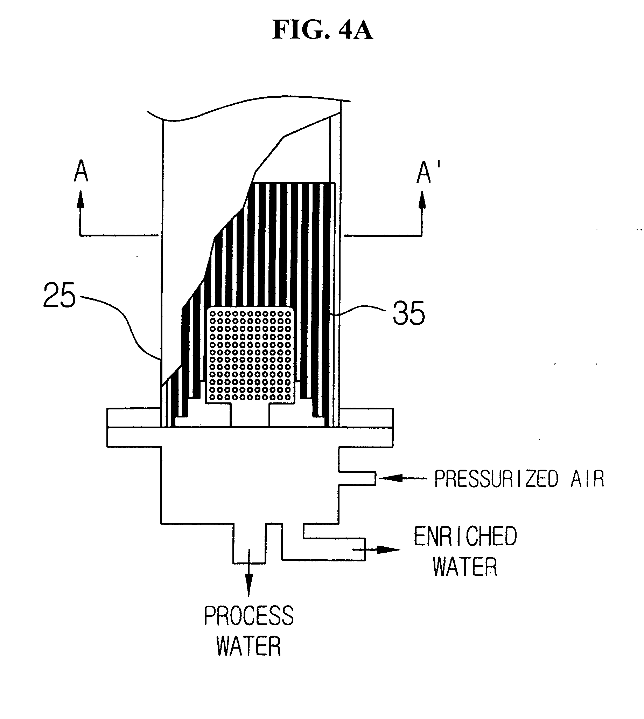

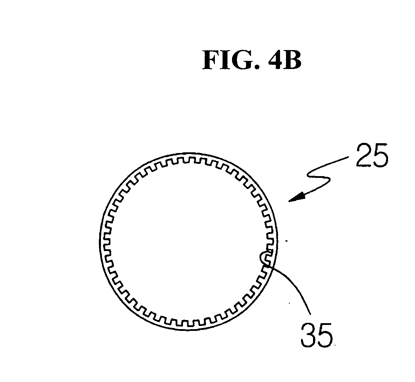

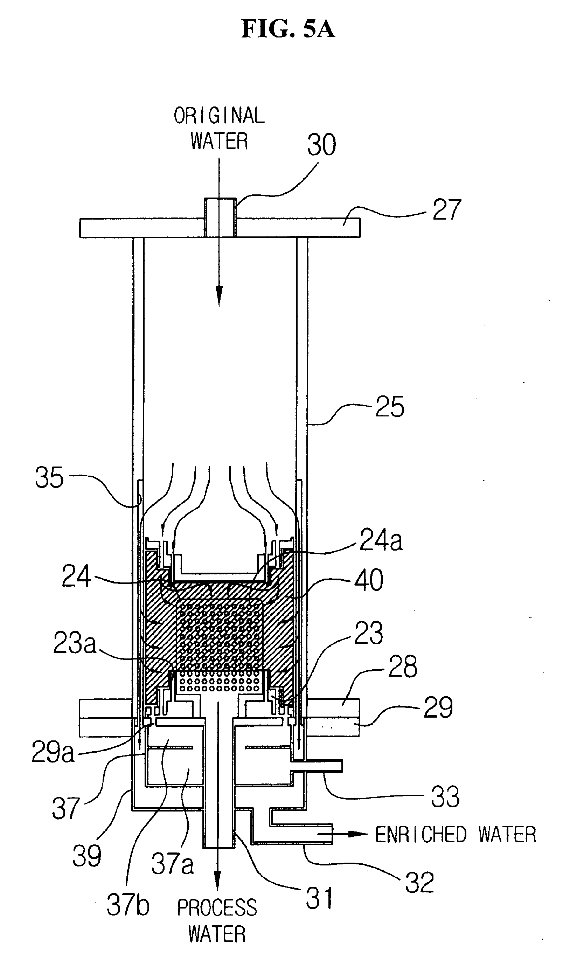

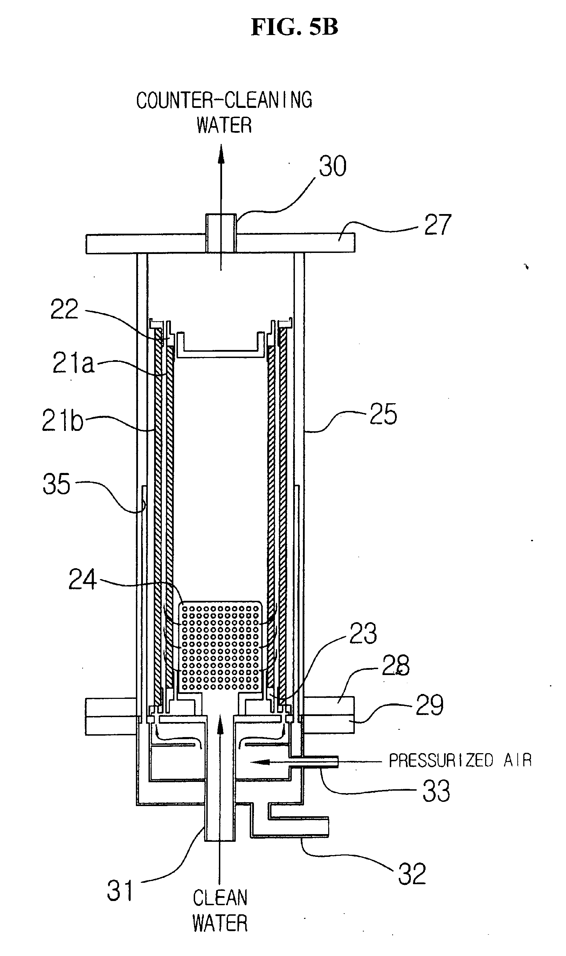

FIG. 3 is a cross-sectional view showing the internal structure of a variable pore micro filter (VPMF) capable of cross flow filtration according to a second embodiment of the present invention. FIG. 4A is a partially exploded cross-sectional view showing grooves formed on the inner wall of the pressure vessel in the second embodiment of the present invention. FIG. 4B is a cross-sectional view cut along line A-A' of FIG. 4A. FIG. 5A is a cross-sectional view for explaining a filtration operation of the second embodiment according to the present invention. FIG. 5B is a cross-sectional view for explaining a counter-cleaning operation of the second embodiment according to the present invention.

First, referring to FIGs. 3, 4A and 4B, a variable pore micro filter according to the second embodiment of the present invention is provided with a plurality of grooves 35 having a predetermined interval and width with respect to each other which are installed vertically in the pressure vessel 25 of the first embodiment. It is preferable that the grooves 35 are formed in the range from the lower portion of the pressure vessel 25 to the height to which the original water can be introduced through the grooves 35 of the pressure vessel 25 at the state that the upper holder 22 falls down and thus the filter layer 40 is compressed during filtration.

Also, an enriched water discharging tube 32 for feeding the enriched water back to the original water tank through the grooves 35 in the pressure vessel 25 during filtration is additionally connected to the lower plate flange 29 through an enriched water collection unit 39 surrounding the pressurized air inflow unit 37. Here, the process water discharging tube 31, the pressurized air injection tube 33 and the enriched water discharging tube 32 are combined on the lower plate flange 29.

In this case, a plurality of throughholes 29b for collecting the enriched water and guiding the collected enriched water to the enriched water collection unit 39 are formed at the respective positions corresponding to the grooves 35 on the lower plate flange 29. The enriched water discharging tube 32 is connected to the original water tank (not shown) through another tube (not shown).

The function of the second embodiment will be described below with reference to FIGs. 5A and 5B.

First, referring to FIG. 5A, the filtration of the second embodiment will be described in detail.

The original water is introduced into the pressure vessel 25 through the original water injection tube 30 during filtration of original water. In this case, the upper holder 22 falls down to the state where the filter layer 40 is compressed to the position at which the filter layer 40 has finite pores, by deposition of the latitudinal thread filters 21a and 21b according to the pressure of the original water. Then, part of the introduced original water flows along the upper and side portions of the filter layer 40 through the throughholes 22a in the upper holder 22, and most of the original water flows along the grooves 35 in the pressure vessel 25 and is filtered through the side portion of the filter layer 40.

Also, part of the original water washes the solids captured in the side portion of the filter layer 40 along the grooves 35 in the pressure vessel 25 and is fed back to the original water tank through the enriched water discharging tube 32 along the plurality of throughholes 29b which are formed vertically on the lower plate flange 29, and then supplied to the variable pore micro filter.

As described above, when the original water is filtered through the filter layer 40, the introduced original water is filtered through the upper and side portions of the filter layer 40 during filtration, to thereby enlarge a filtration area to increase a processing quantity. Also, the enriched water is fed back to the original water tank and thus the concentration of the suspended solids can be maintained constant in the pressure vessel. Accordingly, the high-concentration original water can be ' efficiently filtered, and an amount of the enriched water is reduced by the enriching function of the suspended solids, to thereby save a sewage water processing cost and collect a recycling material.

The counter-cleaning operation of the second embodiment shown in FIG. 5B is same as that of the first embodiment in which the clean water is injected into the process water discharging tube 31 and the pressurized air is injected into the air injection tube 33 to perform a counter-cleaning operation whose description will be omitted.

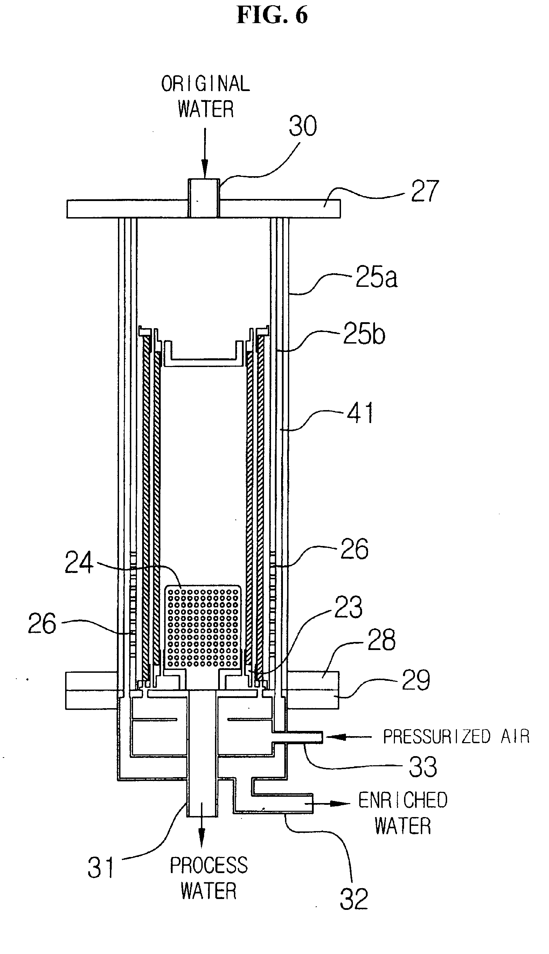

Meanwhile, FIG. 6 shows a variable pore micro filter (VPMF) capable of cross flow filtration employing a double pressure vessel structure according to a third embodiment of the present invention. Instead of a single pressure vessel 25 in the second embodiment of the present invention, an outer pressure vessel 25a and an inner pressure vessel 25b on the lower portion of which a plurality of throughholes 26 which penetrate the inner and outer portions thereof. The remaining portions of the third embodiment have the same structures as those of the second embodiment. In the third embodiment of the present invention, the same elements as those of the second embodiment have the same reference numerals as those of the second embodiment, whose description will be omitted. Only the different portions of the third embodiment in comparison with the second embodiment will be described.

FIG. 6 is a cross-sectional view showing the internal structure of a variable pore micro filter (VPMF) capable of cross flow filtration according to a third embodiment of the present invention. The inner pressure vessel 25b which is positioned in and at a predetermined distance from the outer pressure vessel 25a. The plurality of throughholes having a predetermined interval and size with respect to each other, are formed in the lower portion of the inner pressure vessel 25b.

The throughholes 26 are used so that part of the original water is introduced from the inner portion of the inner pressure vessel 25b to the space 41 formed between the inner pressure vessel 25b and the outer pressure vessel 25a, in the case that the latitudinal thread filters 21a and 21b form the filter layer 40 according to lowering of the upper holder 22, and part of the original water is introduced into the filter layer 40 through the lower-side throughholes 26.

Thus, it is preferable that the throughholes 26 are formed in the range from the lower portion of the pressure vessel 25b to the height at which the original water is introduced from the inner pressure vessel 25b to the space 41

Also, a plurality of throughholes 29c are formed at the position corresponding to the space 41 formed between the outer pressure vessel 25a and the inner pressure vessel 25b, on the lower plate flange 29. Part of the original water introduced from the inner portion of the inner pressure vessel 25b to the space 41 is introduced into the filter layer 40 through the lower-side throughholes 26 and the non-introduced remaining original water and the enriched water is fed back to the original water tank through the enriched water discharging tube 32 along the throughholes 29c on the lower plate flange 29, and then supplied to the variable pore micro filter.

In the case of the variable pore micro filter according to the third embodiment of the present invention, when the original water is injected, the latitudinal thread filters 21a and 21b are deposited between the upper holder 22 and the process water collection vessel 24 in the same way as those of the first and second embodiments, to thereby form part of the filter layer 40. Collection holes 24a are formed on the whole surface of the process water collection vessel 22.

Thus, part of the introduced original water flows through the throughholes 22a on the upper holder 22 from the upper portion of the filter layer 40 to the lower portion thereof, to thereby perform a filtration operation. Simultaneously, most of the original water introduced into the space 41 passes through the throughholes 26 and filtered through the side portion of the filter layer 40. Part of the original water and the enriched water is fed back to the original water tank through the enriched water discharging tube 32 along the throughholes 29c, to thereby perform an enriching function.

Thus, similarly to the second embodiment, the structure of the third embodiment enlarges a filtration area through filtration of the upper and side portions of the filter layer, and increases a processing quantity. Simultaneously, an enriching function of the suspended solids is performed by a cross flow filtration method.

Meanwhile, since the counter-cleaning operation of the third embodiment is same as that of the second embodiment, the detailed description thereof will be omitted.

In the above embodiments, although the process water collection vessel 24 of the cylindrical structure has been described, the present invention is not limited thereto, but can be made of a variety of shapes such as sphere, ellipse, and polygon. Preferably, the side surface of the process water collection vessel has a wrinkled structure to enlarge a filtration area.

As described above, when the present invention is used in a sewage treatment facility or a underwater treatment facility, the high-concentration original water is filtered through the upper and side portions of the filter layer, to increase a processing quantity, and extend a counter-cleaning period, and part of the original water is fed back to the original water tank through the enriched water discharging tube by a cross flow filtration method, which reduces an amount of the enriched water to save the sewage treatment cost and collect the recycling material. Thus, the present invention can be effectively used for filtration of the high-concentration original water.

Also, since the pressurized air can be injected into the pressure vessel uniformly through the air injection tube during counter-cleaning, a cleaning capability can be increased by the turbulent torrent raised by the uniform pressurized air and the clean water, to thereby enhance a counter-cleaning effect.

As described above, the present invention has been described with respect to particularly preferred embodiments. However, the present invention is not limited to the above embodiments, and it is possible for one who has an ordinary skill in the art to make various modifications and variations, without departing off the spirit of the present invention.

## Claims

1. A variable pore micro filter comprising:
a cylindrical pressure vessel;
an upper plate flange connected to the upper portion of the pressure vessel, the upper plate flange being connected with an original water inflow tube through which original water containing suspended solids is introduced;
a lower plate flange connected to the lower portion of the pressure vessel, the lower plate flange being connected with a process water discharging tube for discharging filtered process water;
a latitudinal filtration unit whose lower portion is fixedly installed on a lower holder installed on the lower plate flange and whose upper portion is fixed on a movable upper holder on which a plurality of throughholes providing a filtration passage of the original water are formed, the latitudinal filtration unit having a plurality of flexible latitudinal thread filters forming a filter layer when the plurality of flexible latitudinal thread filters move to the lower portion of the pressure vessel according to an inflow of the original water and then are deposited one after the other;
a process water collection vessel installed on the center of the lower portion of the pressure vessel, collecting the process water filtered through the filter layer into the hollow inner portion through a plurality of process water collection holes, and guiding the collected process water through the process water discharging tube; and
a pressurized air injection unit for injecting pressurized air through the lower plate flange and the lower holder in order to counter-clean the plurality of flexible latitudinal thread filters contaminated by the suspended solids,
wherein the upper holder is lowered at the time of filtering the original water so that the plurality of latitudinal thread filters are compressed around the process water collection vessel to thereby form a filter layer, and the original water flowing into the pressure vessel is filtered through the upper portion and the side portion of the filter layer.

2. The variable pore micro filter of claim 1, further comprising:
a plurality of grooves formed on the inner circumference of the pressure vessel in order to treat the high-concentration original water;
an enriched water discharging tube for feeding the enriched water generated along the grooves to the original water tank in the lower portion of the lower plate flange;
an enriched water collection unit for collecting the enriched water and guiding the collected enriched water to the enriched water discharging tube in the lower portion of the lower plate flange,
wherein a plurality of throughholes for collecting the enriched water and guiding the same to an enriched water collection unit are formed in the lower plate flange at the position corresponding to the grooves of the pressure vessel, so that cross flow filtration is performed during filtration at the same time of filtering through the upper and lower portions of the filter layer along the upper holder and the grooves of the pressure vessel.

3. The variable pore micro filter of claim 1, wherein said plurality of latitudinal thread filters comprise an inner latitudinal thread filter made of a relatively thin fiber in order to treat the original water at a high purification degree; and
an outer latitudinal thread filter made of a relatively thick fiber in order to smoothen the flow of the original water in the lateral direction of the filter layer, and wherein said inner and outer latitudinal thread filters form a double structure complex latitudinal thread filter.

4. The variable pore micro filter of claim 1, further comprising a pressurized air buffering unit for buffering the pressurized air injected from the pressurized air injection unit and applying uniform pressurized air into a plurality of injection holes concentrically formed on the lower plate flange,
wherein a plurality of throughholes are formed up and down at a position where pressurized air can be injected between the plurality of latitudinal thread filters concentrically arranged on the lower holder.

5. The variable pore micro filter of claim 4, wherein said pressurized air buffering unit comprises a first chamber through which the pressurized air is introduced, and a second chamber for communicating with the first chamber in the central portion thereof and guiding the pressurized air into the plurality of injection holes on the lower plate flange.

6. A variable pore micro filter (VPMF) for performing cross flow filtration, the variable pore micro filter comprising:
an outer cylindrical pressure vessel;
an inner pressure vessel disposed concentrically distant by a predetermined interval in the outer pressure vessel, and on the lower portion of which a plurality of throughholes are formed;
an upper plate flange connected to the upper portions of the outer and inner pressure vessels, the upper plate flange being connected with an original water inflow tube through which original water containing suspended solids is introduced;
a lower plate flange connected to the lower portions of the outer and inner pressure vessels, the lower plate flange being connected with a process water discharging tube for discharging filtered process water;
a latitudinal filtration unit whose lower portion is fixedly installed on a lower holder installed on the lower plate flange and whose upper portion is fixed on a movable upper holder on which a plurality of throughholes providing a filtration passage of the original water are formed, the latitudinal filtration unit having a plurality of flexible latitudinal thread filters forming a filter layer when the plurality of flexible latitudinal thread filters move to the lower portion of the pressure vessel according to an inflow of the original water and then are deposited one after the other;
a process water collection vessel installed on the center of the lower portion of the pressure vessel, collecting the process water filtered through the filter layer into the hollow inner portion through a plurality of process water collection holes, and guiding the collected process water through the process water discharging tube;
an original water enriching unit for collecting the original water and the enriched water which has been introduced into a space formed between the outer and inner pressure vessels through the throughholes formed on the upper portion of the inner pressure vessel but has not been introduced into the inner pressure vessel through the throughholes formed on the lower portion of the inner pressure vessel, via the lower plate flange and feeding the collected water back to the original water tank; and
a pressurized air injection unit for injecting pressurized air through the lower plate flange and the lower holder in order to counter-clean the plurality of flexible latitudinal thread filters contaminated by the suspended solids,
wherein the upper holder is lowered at the time of filtering the original water so that the plurality of latitudinal thread filters are compressed around the process water collection vessel to thereby form a filter layer, and the original water flowing into the pressure vessel is filtered through the upper portion and the side portion of the filter layer, and through the throughholes on the upper holder and the lower-side throughholes on the inner pressure vessel, and then collected into the process water vessel, and the original water and the enriched water which has not been introduced into the inner pressure vessel is collected through the lower plate flange and then fed back to the original water tank.

7. The variable pore micro filter of claim 6, wherein a plurality of collection holes for collecting the process water are formed on the upper and side portions of the process water collection vessel,
said plurality of latitudinal thread filters comprise multiple latitudinal thread filters whose both ends are concentrically arranged on the upper and lower holders,
a plurality of throughholes are formed at positions where the pressurized air can be injected between the concentrically arranged multiple latitudinal thread filters on the lower holder,
a pressurized air buffering unit for buffering the pressurized air injected from the pressurized air injection unit and applying uniform pressurized air into a plurality of injection holes on the lower plate flange, and
an enriched water collection unit for collecting the enriched water and guiding the collected enriched water to the enriched water discharging tube in the lower portion of the lower plate flange.
